# EUROPEAN PATENT APPLICATION

(11) **EP 4 105 930 A1**
(43) Date of publication of application: **21.12.2022**
(21) Application number: 22179581.8
(22) Date of filing: 17.06.2022
(51) Int. Cl.: G11B 7/0065, G11B 7/09, G11B 7/2405

(54) **TRANSMISSION-TYPE HOLOGRAPHIC OPTICAL STORAGE MEDIUM AND DEVICE, AND METHOD FOR RECORDING AND READING ON TWO SIDES OF STORAGE MEDIUM**

(30) Priority: 17.06.2021 CN 202110671800
(71) Applicant: Amethystum Storage Technology Co., Ltd., Meizhou, Guangdong 514700 (CN)
(72) Inventor: HU, Dejiao, Shejiang Town, Mei County, Meizhou, 514700 (CN); LIU, Yicheng, Shejiang Town, Mei County, Meizhou, 514700 (CN); TIAN, Jun, Shejiang Town, Mei County, Meizhou, 514700 (CN)
(74) Representative: Puschmann Borchert Kaiser Klettner Patentanwälte Partnerschaft mbB

(57) **Abstract**

The present invention provides a transmission-type holographic optical storage medium and device, and a method for recording and reading on two sides of the holographic optical storage medium. The optical storage medium includes a first substrate, a second substrate, a recording layer and a dichroic layer. The recording layer is used for recording a hologram with data information. One side of the second substrate facing the recording layer is engraved with a concave-convex structure for a servo light beam to position a recording/reading position and achieve a servo track locking function. The dichroic layer can reflect the servo light beam and transmit recording/reading light. The storage medium according to the present invention is less susceptible to influence of external environment and is more stable compared with a conventional reflection-type storage medium. In addition, the first substrate, the second substrate, the recording layer and the dichroic layer of the holographic optical storage medium of the present invention are designed without a space therebetween, so that recording and reading on two sides can be achieved without separately designing a recording layer on both sides of the storage medium, thereby simplifying the processing technology thereof.

## Description

### CROSS REFERENCE TO RELATED APPLICATIONS

The present application claims priority from Chinese Patent Application No. 202110671800.6 filed on June 17, 2021, all of which are hereby incorporated herein by reference.

### TECHNICAL FIELD

The present invention relates to the technical field of optical storage, and more particularly, relates to a transmission-type holographic optical storage medium and device, and a method for recording and reading on two sides of the storage medium.

### BACKGROUND

Holographic optical storage is a high-capacity and high-rate storage method with which data is recorded in a three-dimensional form on a holographic optical storage medium. Such storage can meet the needs of large-scale data storage in the new century. It is thus expected to replace the existing optical storage technology as a main way for mass data storage in next generation.

In order to accurately position the holographic recording or reading position, a servo optical path is generally designed, and an address layer is reset on the holographic optical storage medium. With such configuration, a servo light beam reflected from the address layer is captured via a four-quadrant detector and is subjected to signal processing to obtain address information so as to position the recording/reading position by the servo light beam.

Information reading in the holographic optical storage is obtained by optical path access, in which blue laser beam or green laser beam is taken as a reference light beam and red laser is taken as a servo light beam. Blue laser beam or green laser beam irradiates a grating stripe in the recording material to reproduce a signal light beam by diffraction which is captured by a camera after imaging. The red laser light reflected from the address layer is captured by the four-quadrant detector and subjected to signal processing to obtain the address information.

Most of the known holographic optical storage media reported at home and abroad are reflection-type holographic optical storage media. CN 207517357 U discloses a holographic optical storage device based on dichroic reflection, in which a dichroic layer and an address layer respectively reflect the reference light beam and the servo light beam so as to acquire address information or data information. The dichroic layer and the address layer of the reflection-type storage medium are generally separated with a separation layer disposed therebetween. Such complicated structure of the reflection-type storage medium thus increases difficulty of processing. In addition, since the servo light beam reflected and the recording/reading light beam reflected are on the same side, the reflection-type storage medium thus is prone to mutual interference, and easily affected by external factors, such as change of light wavelength and incident angle of the recording/recording light beam. In addition, in order to achieve recording and reading on two sides of the medium to avoid mutual interference, a recording layer is required to arrange on both sides of the storage medium, thus further increasing the difficulty of processing and instability of information recording and reading.

Therefore, it is desirable to design a holographic optical storage medium, which can achieve stable recording and reading of holograms carrying data information and simultaneously without increasing difficulty of processing.

### SUMMARY

It is therefore an object of the present invention to provide a transmission-type holographic optical storage medium and device, and a method for recording and reading on two sides of the medium which is free from the aforesaid drawbacks of the prior art.

In a first aspect, a transmission-type holographic optical storage medium is provided according to the present invention, which includes a first substrate, a second substrate, a recording layer and a dichroic layer. The recording layer is configured for recording a hologram carrying data information. A surface of one side of the second substrate facing the recording layer is engraved with a concave-convex structure for a servo light beam to position a recording/reading position and achieving a servo track locking function at the same time. The dichroic layer can reflect the servo light beam and transmit the recording/reading light beam. When data is recorded, a reference light beam interferes with a signal light beam in the recording layer, the recording layer senses light to record the hologram with the data information. When data is read, the reference light beam is diffracted to form a reproduced signal light beam in the recording layer.

The reflection-type holographic optical storage medium reflects the recording/reading light beam under the action of the dichroic layer, so that the direction of gratings in the reflection-type holographic optical storage medium is mainly parallel to the surface of the medium, causing that the information reading process is susceptible to the influence of a wavelength, medium deformation and instability of optical path, which is sensitive to external factors. In addition, the recording and reading of information are performed on the same side of the medium. As known, gratings in different directions are affected differently by environmental interference, especially, the information reading process of holograms with gratings perpendicular to the surface of the medium is less affected by the wavelength, medium deformation and instability of optical path. However, the transmission-type holographic optical storage according to the present invention, the grating direction is mainly perpendicular to the surface of the medium, and recording and reading of the hologram are performed on different sides of the medium. Therefore, the information reading process of the present invention is less susceptible to the influence of the external environment and is more stable compared with a conventional reflection-type holographic optical storage medium. At the same time, the first substrate, the second substrate, the recording layer and the dichroic layer of the holographic optical storage medium according to the present invention are designed without a space therebetween, and recording and reading on two sides of the medium can be achieved without separately designing the recording layer on both sides of the storage medium, thereby also simplifying processing technology thereof. The recording/reading light beam refers to a reference light beam and/or a signal light beam. In addition, according to the present invention, the surface of one side of the second substrate facing the recording layer is engraved with the concave-convex structure which is used for the servo light beam to position the recording/reading position, and enabling the signal light beam or the reference light beam to move according to a certain trajectory under the action of a servo system, thus realizing a servo track locking function.

Specifically, the dichroic layer is uniformly coated on a surface of the concave-convex structure on the second substrate.

According to the present invention, the first substrate of the storage medium is located on a side of the recording layer opposite to the dichroic layer, and the second substrate is located on a side of the dichroic layer opposite to the recording layer. The first substrate, the recording layer, the dichroic layer and the second substrate are sequentially stacked. When the hologram is recorded, the reference light beam and signal light beam of the recording/reading light beam are incident on the side where the first substrate or the second substrate is located and interfere with each other on the recording layer and expose to generate the hologram. When the data information on the hologram is reproduced, the reference light beam of the recording/reading light beam correspondingly transmits through the first substrate or the second substrate to be incident, and is diffracted on the recording layer to form a reproduced signal light, the reproduced signal light further transmits through the dichroic layer, and the second substrate or the first substrate. The hologram carrying the data information is thus read on the other side of the medium opposite to the side where the recording/reading light beam is incident.

The concave-convex structure on the surface of the second substrate according to the present invention may include various structures, such as grooves or ridges. With the configuration of the first substrate and the second substrate, the recording layer and the concave-convex structure on the surface of the second substrate can be protected from being damaged.

The concave-convex structure on the surface of the second substrate according to the present invention can be used for the servo light beam to position the recording/reading position, and achieving servo track locking at the same time, instead of only disposing an address layer separately, which can greatly simplify the production process of the storage medium.

According to the present invention, an anti-reflection layer can be disposed on a side of the first substrate opposite to the recording layer, another anti-reflection layer can be also disposed on a side of the second substrate opposite to the recording layer. Such configuration can reduce the reflection of the recording/reading light beam or the servo light beam when transmitting through the first substrate and the second substrate, so that the recording/reading light beam or the servo light beam can transmit through the first substrate and the second substrate as completely as possible without reflection.

In order to better protect the recording layer and the concave-convex structure on the surface of the second substrate, the first substrate and the second substrate are preferably made from transparent thermoplastics. The recording layer and the concave-convex structure on the surface of the second substrate thus are free of deformation, such as shrinking.

In view of the characteristics of red light, blue light and green light, the servo light beam is preferably in form of red laser, and the recording/reading light beam is preferably in form of blue laser or green laser.

In another aspect, a transmission-type holographic optical storage device is provided according to the present invention, which includes the above-mentioned transmission type holographic optical storage medium, a servo module, a light source module, a beam combing module, an optical head module, and a signal output module.

The servo module is configured for outputting a servo light beam. The light source module is configured for outputting a recording/reading light beam. The beam combing module is configured for converting the input recording/reading light beam into a coaxial signal beam and reference beam with an orthogonal polarization direction when recoding. The optical head module is configurated for converting the input coaxial signal light beam and reference light beam with the orthogonal polarization direction into non-coaxial beams, and combining the recording/reading light beam with the servo light beam into one beam. With positioning of the servo light beam, the signal light beam and the reference light beam directly interfere with each other on a recording layer to form a hologram, or firstly transmit through the dichroic layer to interfere with each other on the recording layer to form a hologram. When information is read, the input reference light beam is diffracted at a position where the servo light beam is positioned to reproduce the signal light beam, the reproduced signal beam transmits through the dichroic layer, so that the information is read by the signal output module on the other side of the storage medium opposite to the side where the reference beam is incident. In the servo module, the servo beam is reflected by the dichroic layer with obtained address information to position the recording/reading position of the recording/reading light beam. At the same time the servo beam performs servo track locking on the recording/reading light beam so that the recording/reading light beam can move according to a specific trajectory.

In still another aspect, a method for recording and reading on two sides of the holographic optical storage medium is further provided according to the present invention, in which the above-mentioned transmission-type holographic optical storage medium or the holographic optical storage device is used. The method includes the following steps.

According to the method, when a hologram is recorded, a signal light beam and a reference light beam is input on one side of the storage medium, and a servo light beam is input at the same time. The servo light beam is reflected by the dichroic layer to acquire an address information via signal processing. The signal light beam and the reference light beam directly interfere with each other in a region around a position where the servo beam is positioned on the recording layer to form a hologram, or firstly transmit through the dichroic layer and then interfere with each other in the region around the position where the servo light beam is positioned in the recording layer to form a hologram.

When the hologram is reproduced or read, the reference light beam and the servo light beam are input on the same side with recording of the hologram, the servo light beam is reflected back by the dichroic layer, so that the address information is acquired via signal processing based on the servo light beam reflected. The reference beam is diffracted to form a reproduced signal beam in the region around the position where the servo beam is positioned in the recording layer, the reproduced signal light beam then transmits through the dichroic layer and reproduce information on the other side of the storage medium opposite to the side where the reference light beam is input.

Compared with the prior art, the storage medium according to the present invention is less susceptible to the influence of the external environment, and is more stable with respect to the conventional reflection-type holographic optical storage medium. In addition, the first substrate, the second substrate, the recording layer and the dichroic layer are designed without a space therebetween, so that recording and reading on both sides of the medium can be achieved without separately designing a recording layer on both sides of the storage medium, thus simplifying the processing technology.

### BRIEF DESCRIPTION OF THE DRAWINGS

FIG. 1 is a structural schematic diagram of a transmission-type holographic optical storage medium according to the present invention, a beam being incident from a first substrate.
FIG. 2 is another structural schematic diagram of a transmission-type holographic optical storage medium according to the present invention, a beam being incident from a second substrate, and
FIG. 3 is a structural schematic diagram of a transmission type holographic optical storage device according to the present invention.

### DETAILED DESCRIPTION

The accompanying drawings of the present invention are only used for exemplary illustration, and should not be construed as limiting the present invention. In order to better illustrate the following embodiments, some parts of the drawings may be omitted, enlarged or reduced, and they do not represent the size of actual products; for those skilled in the art, it is understandable that some well-known structures and their descriptions in the drawings may be omitted.

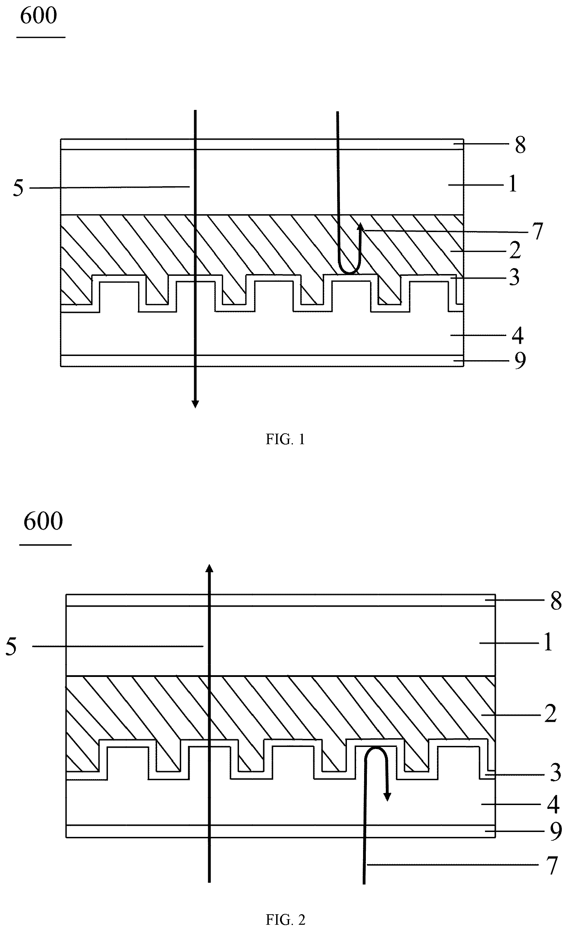

FIG. 1 provides a transmission-type holographic optical storage medium 600 according to one embodiment. A first substrate 1, a recording layer 2, a dichroic layer 3 and a second substrate 4 are sequentially disposed from top to bottom. The recording layer is used for recording/reading light beam 5 to record/read a hologram corresponding. A surface of one side of the second substrate 4 facing the recording layer 2 is engraved with a concave-convex structure for a servo light beam to position a recording/reading position and achieving a servo track locking at the same time. The dichroic layer 3 is uniformly coated on a surface of the concave-convex structure on the second substrate 4. The dichroic layer 3 can reflect the servo light beam and transmit the recording/reading light beam.

For holograms with gratings in different directions, the information reading process thereof is affected differently by environmental interference, especially, the information reading process of holograms with gratings perpendicular to the medium surface is less affected by the environment. According to the transmission-type holographic optical storage in this embodiment, the grating direction of holograms recorded is mainly perpendicular to the medium surface and recording and reading are performed on different sides of the medium. Therefore, the information reading process of this embodiment is less susceptible to influence from the external environment, which is thus more stable with respect to a conventional reflection-type holographic optical storage medium. In addition, the first substrate 1, the second substrate 4, the recording layer 2 and the dichroic layer 3 are designed without a space therebetween, and recording and reading on two sides can be achieved without separately designing the recording layer 2 on both sides of the storage medium, thus achieving simple processing technology. The recording/reading light beam 5 according to this embodiment is a reference light beam and/or a signal light beam. Specifically, the recording light refers to a reference light beam and a signal light beam, the reading light refers to a reference light beam.

The storage medium may be a card storage medium or a disc storage medium. In this embodiment, the storage medium is a disc storage medium.

The concave-convex structure on the surface of the second substrate 4 consists of grooves or ridges, such structure design determines a position where a holographic image is recorded or read on the recording layer. The concave-convex structure can also be in other shapes.

According to the transmission-type holographic optical storage medium in this embodiment, the first substrate 1 is located on a side of the recording layer 2 opposite to the dichroic layer 3, and the second substrate 4 is located on a side of the dichroic layer opposite to the recording layer 2. The inner side surface of the second substrate 4 is engraved with the concave-convex structure. When a hologram is recorded, the recording/reading light beam, namely the reference light beam and the signal light beam, are introduced into the first substrate or the second substrate interfere with each other on the recording layer 2 and the recording layer 2 is exposed to generate a hologram. When the data information on the hologram is reproduced or read, the recording/reading light beam, namely the reference light beam, correspondingly transmits through the first substrate 1 or the second substrate 4 to be incident, and is diffracted on recording layer 2 to reproduced the signal light beam, the reproduced signal light beam then sequentially transmits through the dichroic layer 3, and the second substrate 4 or the first substrate 1, the hologram with the data information thus is read on the other side of the medium opposite to the light beam introduced. The first substrate 1 and the second substrate 4 are disposed so that the recording layer and/or the concave-convex structure can be protected from being damaged. In addition, the concave-convex structure on the surface of the second substrate 4 in this technical solution can be used for the servo light beam to position the recording/reading position, achieving the function of servo track locking at the same time, instead of merely disposing an address layer separately, which can simplify the production process.

In this embodiment, the first substrate 1 and the second substrate 4 are preferably made from transparent thermoplastics, so that the recording layer 2 and the concave-convex structure of the second substrate 4 are free of deformation, such as shrinking, which further enhances stability of information recording/reading.

In order to reduce the reflection of the recording/reading light beam 5 or a servo light beam 7 when transmitting through the first substrate 1 and the second substrate 4, and increase the transmissivity of light to ensure that the recording/reading light beam or the servo light beam transmits through the first substrate 1 and the second substrate 4 as completely as possible, an anti-reflection layer 8 is disposed on a side of the first substrate 1 opposite to the recording layer 2, and another anti-reflection layer 9 is disposed on a side of the second substrate 4 opposite to the recording layer 2.

In view of the characteristics of red light, blue light and green light, the servo light beam 7 in this embodiment is preferably in form of a red laser, and the recording/reading light beam 5 is preferably in form of a blue laser or green laser. As needed, it is also possible to use light of other wavelengths as the servo light beam 7 and the recording/reading light beam 5.

That is to say, according to the present embodiment, the upper surface of the recording layer 2 is covered with the first substrate 1, the lower surface of the recording layer 2 is in contact with the dichroic layer 3, and the upper surface of the second substrate 4 is provided with the concave-convex structure. The surface of the concave-convex structure is uniformly coated with the dichroic layer 3, and the side of the first substrate 1 opposite to the recording layer 2 and the side of the second substrate 4 opposite to the recording layer 2 are uniformly coated with the anti-reflection layer 8, 9 respectively to increase the transmissivity of the recording/reading light beam 5 and the servo light beam 7 on the first substrate 1 and the second substrate 4. The dichroic layer 3 is designed to make the recording/reading light beam 5 transmit through and to reflect the servo beam 7, so that the hologram carrying the data information is read in a transmission method, namely recording and reading are performed on two sides of the storage medium, which is achieved just by one recording layer.

Referring to FIG. 1 again, when recording a hologram, the blue or green recoding/reading light beam 5 and the red servo light beam 7 are respectively incident on the side where the first substrate 1 located. The servo light beam 7 successively transmits through the anti-reflection layer 8, the first substrate 1 and the recording layer 2, then reaches the dichroic layer 3 to acquire an address information, the servo light beam 7 with address information is then reflected by the dichroic layer 3. The recoding/reading light beam 5 is a signal light beam and a reference light beam. The signal light beam and the reference light beam transmit through the anti-reflection layer 8 and the first substrate 1, then interfere with each other in a region around a position where the servo light beam 7 is positioned in the recording layer 2 to form a hologram. When reading or reproducing the hologram, the recording/reading light beam 5 and the servo light beam 7 are input on the same side with the recording. The recording/reading light beam 5 is the reference light beam. The servo beam 7 is reflected by the dichroic layer 3 and successively transmits through the recording layer 2, the first substrate 1 and the anti-reflection layer 8, and is finally collected for signal processing to acquire the address information. The reference beam transmits through the anti-reflection layer 8 and the first substrate 1, then is diffracted to form a reproduced signal light beam in the region around the position where the servo beam 7 is positioned in the recording layer 2. The reproduced signal light beam successively transmits through the dichroic layer 3, the second substrate 4 and the anti-reflection layer 9 to reproduce the hologram carrying the data information on the other side opposite to the side where the recording/reading light beam is incident, namely, on the side where the second substrate 4 is located.

Referring to FIG. 2, when recording a hologram, the blue or green recording/reading light beam 5 and the red servo light beam 7 are respectively incident on the side where the second substrate 4 is located. The servo light beam 7 successively transmits through the anti-reflection layer 9 and the second substrate 4, then is reflected by the dichroic layer 3, the reflected servo light beam 7 successively transmits through the second substrate 4 and the anti-reflection layer 9, and is finally collected to perform signal processing to acquire an address information. The recording/reading light beam 5 is the signal beam and the reference beam. The signal beam and the reference beam successively transmit through the anti-reflection layer 9, the second substrate 4 and the dichroic layer 3, and interfere with each other in a region around a position where the servo light beam 7 is positioned in the recording layer 2 to form a hologram. When reading or reproducing the hologram, the recording/reading light beam 5 and the servo light beam 7 are input on the same side with recording of the hologram. The servo beam 7 is reflected by the dichroic layer 3 after transmitting through the anti-reflection layer 9 and the second substrate 4, the reflected servo beam 7 transmits through the second substrate 4 and the anti-reflection layer 9, and is finally collected for signal processing to acquire the address information. The recording/reading light beam 5 is the reference light beam. The reference beam successively transmits through the anti-reflection layer 9, the second substrate 4 and the dichroic layer 3, and is diffracted to form a reproduced signal light beam in the region around the position where the servo beam is positioned in the recording layer 2. The reproduced signal light beam successively transmits through the first substrate 1 and the anti-reflection layer 8, a hologram carrying data information is reproduced on the other side opposite to the side where the recording/reading light beam 5 is incident, namely, one the side where the first substrate 1 is located.

The storage medium according to this embodiment, since a grating perpendicular to the medium surface can be generated, the information reading process is less susceptible to the influence of the external environment, and is more stable with respect to the conventional reflection-type holographic optical storage medium. In addition, the first substrate, the second substrate, the recording layer and the dichroic layer are designed without a space therebetween, and recording and reading performed on two sides is achieved without separately designing the recording layer on both sides of the storage medium, thereby without increasing difficulty of the processing.

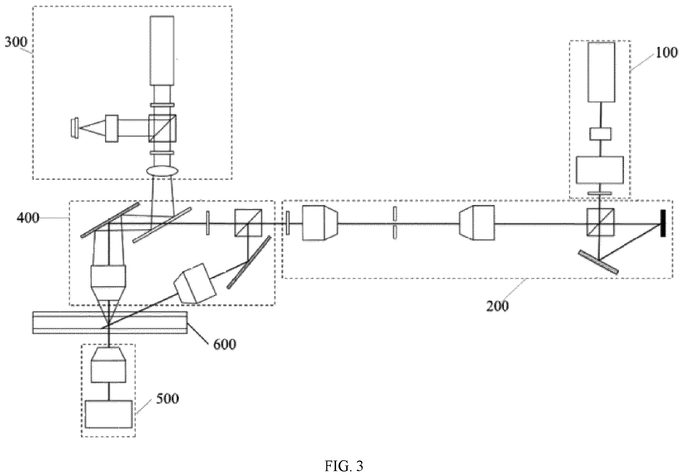

FIG. 3 provides a transmission-type holographic optical storage device according to the present invention, which includes the transmission-type holographic optical storage medium 600 mentioned above. The device further includes a servo module 300, a light source module 100, a beam combing module 200, an optical head module 400, and a signal output module 500. The servo module 300 is configured for outputting a servo light beam. The light source module 100 is configured for outputting a recording/reading light beam. The beam combing module 200 is configured for converting the input recording/reading light beam into a coaxial signal beam and reference light beam with an orthogonal polarization direction when recording. The optical head module 400 is configured for converting the input coaxial signal light beam and reference light beam with the orthogonal polarization direction into non-coaxial beams, and combining the recording/reading light beam with the servo light beam into one beam. With the positioning of the servo light beam, the signal light beam and the reference light beam directly interfere with each other on the recording layer 2 to form a hologram by exposure, or firstly transmit through the dichroic layer 3 and then interfere with each other on the recording layer 2 to form a hologram by exposure. When reading the information, the input reference light beam is diffracted at a position where the servo light beam 7 is positioned to reproduce the signal beam, the reproduced signal beam transmits through the dichroic layer 3, the information thus is read by the signal output module 500 on the other side of the storage medium opposite to the side where the reference beam is incident.

An optical path for the signal light and an optical path for the reference light in this embodiment are combined into one optical path, referring to as a single-arm structure. It is also adaptable to the optical system in which the signal optical path and the reference optical path are separate, referring to as a double-arm structure.

A method for recording and reading on two sides of the holographic optical storage medium is further provided. The transmission-type holographic optical storage medium or the holographic optical storage device mentioned above is used.

According to the embodiment, when a hologram is recoded, a signal light beam and a reference light beam are input on one side of the storage medium, and a servo light beam 7 is input at the same time. The servo light beam is reflected by the dichroic layer 3 to acquire an address information via signal processing. The signal light beam and the reference light beam directly interfere with each other in a region around a position where the servo light beam 7 is positioned on the recording layer 2 to form a hologram, or firstly transmit through the dichroic layer 3 and then interfere with each other in the region around the position where the servo light beam 7 is positioned in the recording layer 2 to form a hologram.

When the hologram is reproduced or read, the reference light beam and the servo light beam 7 are input on the same side with recording of the hologram, the servo light beam 7 is reflected by the dichroic layer, the address information is acquired via signal processing based on the servo light beam reflected. The reference beam is diffracted to form a reproduced signal light beam in the region around the position where the servo light beam 7 is positioned in the recording layer 2, and the reproduced signal light beam projects the data information reproduced on the other side of the storage medium opposite to the side where the reference light beam is input.

Obviously, the above-mentioned embodiments of the present invention are only examples for clearly illustrating the technical solutions of the present invention, and are not intended to limit the specific embodiments of the present invention. Any modifications, equivalent replacements, improvements, etc. made within the spirit and principles of the claims of the present invention shall be included within the protection scope of the claims of the present invention.

## Claims

1. A transmission-type holographic optical storage medium, comprising:
a first substrate;
a recording layer, which is configured for recording/reading a hologram with data information by a recording/reading light beam;
a dichroic layer; and
a second substrate,
the first substrate, the recording layer, the dichroic layer and the second substrate being sequentially stacked,
wherein a surface of one side of the second substrate facing the recording layer is engraved with a concave-convex structure for a servo light beam to position a recording/reading position to record/read the hologram, the concave-convex structure also achieves a servo track locking to make the recording/reading light beam move according to a certain trajectory, and the dichroic layer is able to reflect the servo light beam and transmit the recording/reading light.

2. The transmission-type holographic optical storage medium according to Claim 1, wherein the dichroic layer is uniformly coated on a surface of the concave-convex structure on the second substrate.

3. The transmission-type holographic optical storage medium according to Claim 1, wherein the first substrate is located on a side of the recording layer opposite to the dichroic layer, the second substrate is located on a side of the dichroic layer opposite to the recording layer,
wherein when a hologram is recorded, the recording/reading light beam includes a reference light beam and a signal light beam, which are incident from the first substrate or the second substrate and interfere with each other on the recording layer and expose to generate the hologram; and
when the hologram with data information is reproduced, the recording/reading light beam includes the reference light beam which transmits through the first substrate or the second substrate to be incident, and is diffracted on the recording layer to form a reproduced signal light, the reproduced signal light further correspondingly transmits the second substrate or the first substrate, so that the hologram with data information is read on the other side of the medium opposite to the side where the recording/reading light beam is incident.

4. The transmission-type holographic optical storage medium according to Claim 1, wherein an anti-reflection layer is disposed on a side of the first substrate opposite to the recording layer, another anti-reflection layer is disposed on a side of the second substrate opposite to the recording layer.

5. The transmission-type holographic optical storage medium according to Claim 1, wherein the servo light beam is in form of a red laser, and the recording/reading light beam is in form of a blue laser.

6. The transmission-type holographic optical storage medium according to Claim 1, wherein the servo light beam is in form of a red laser, and the recording/reading light beam is in form of a green laser.

7. A transmission-type holographic optical storage device, comprising the transmission-type holographic optical storage medium according to Claim 1, and further comprising:
a servo module, which is configured for outputting a servo light beam;
a light source module, which is configured for outputting a recording/reading light beam;
a beam combing module, which is configured for converting the input recording/reading light beam into a coaxial signal light beam and reference light beam which have an orthogonal polarization direction;
an optical head module, which is configured for converting the input coaxial signal light beam and reference light beam having the orthogonal polarization direction into non-coaxial light beams, and combining the recording/reading light beam with the servo light beam into one beam, wherein when recording a hologram, under positioning of the servo light beam, a signal light beam and a reference light beam of the recording/reading light beam directly interfere with each other on a recording layer of the storage medium to form the hologram, or firstly transmit through a dichroic layer of the storage medium to interfere with each other on a recording layer of the storage medium to form the hologram; and
a signal output module, wherein when the hologram is read, the reference light beam of the reading light beam is diffracted in a region around a position where the servo light beam is positioned to reproduce the signal light beam, the signal light beam reproduced transmits through the dichroic layer, so that the hologram is read on the other side of the storage medium opposite to the side where the reference light beam is incident.

8. A method for recording and reading on two sides of a holographic optical storage medium, wherein the holographic optical storage medium according to Claim 1 or the holographic optical storage device according to Claim 7 is used, the method comprises steps of:
when a hologram is recorded, inputting a signal light beam and a reference light beam on one side of the storage medium, and inputting a servo light beam at the same time; the servo light beam being reflected back by a dichroic layer of the storage medium to acquire an address information via signal processing, the signal beam and the reference beam directly interfering with each other in a region around a position where the servo light beam is positioned in a recording layer of the storage medium to form the hologram, or firstly transmitting through the dichroic layer and then interfering with each other in a region around a position where the servo light beam is positioned in a recording layer of the storage medium to form the hologram; and
when the hologram is reproduced, inputting the reference light beam and the servo light beam on the same side, the servo light beam being reflected back by the dichroic layer to acquire the address information via signal processing, the reference beam being diffracted to reproduce the signal light beam in the region around the position where the servo light beam is positioned in the recording layer, the signal light beam transmitting through the dichroic layer to reproduce the hologram on the other side of the storage medium opposite to the reference light beam input.
